Europäisches Patentamt

European Patent Office

Office européen des brevets

(11) Veröffentlichungsnummer: **0 130 148**
A2

# EUROPÄISCHE PATENTANMELDUNG

(21) Anmeldenummer: **84810287.7**

(22) Anmeldetag: **12.06.84**

(51) Int. Cl.⁴: **B 65 B 51/30**

(30) Priorität: **24.06.83 CH 3464/83**

(43) Veröffentlichungstag der Anmeldung:
**02.01.85 Patentblatt 85/1**

(84) Benannte Vertragsstaaten:
**DE FR GB NL**

(71) Anmelder: **SIG Schweizerische Industrie-Gesellschaft**

**CH-8212 Neuhausen am Rheinfall(CH)**

(72) Erfinder: **Deutschländer, Gert
Charlottenweg 21
CH-8212 Neuhausen am Rheinfall(CH)**

(74) Vertreter: **Justitz-Wormser, Daisy P., Dipl.-Chem. et al,
PATENTANWALTS-BUREAU ISLER AG Postfach 6940
Walchestrasse 23
CH-8023 Zürich(CH)**

(54) Verfahren zur Herstellung einer Schlauchpackung und Vorrichtung zur Ausführung des Verfahrens sowie nach dem Verfahren hergestellte Packung.

(57) Zwei gegenläufig rotierende, beheizbare Klemmbacken (1) mit bandförmigen Prägeflächen (4) packen und versiegeln einen Schlauch (18) zwischen zwei Verpackungsgegenständen mit Quernähten (11, 12). Ein Messer (6) und eine Gegenfläche trennen gleichzeitig den Schlauch zwischen einer Fuss- und einer Kopfnaht (12, 11). Die bandförmigen Prägeflächen (4) sind auf zylindrischen Oberflächen (5) der Klemmbacken (1) mindestens in einem Abschnitt schraubenlinienförmig angeordnet. Bei der Bildung einer Quernaht wandert ein vergleichsweise kleiner Druckbereich quer zur Förderrichtung (9) über die ganze Breite des Schlauches, so dass auch dickere Bereiche, z.B. Längsnähte, ohne Druckänderungen überrollt werden. Die hergestellten Packungen besitzen eine verbesserte Dichtigkeit.

Fig. 1

0130148

Verfahren zur Herstellung einer Schlauchpackung
und Vorrichtung zur Ausführung des Verfahrens
sowie nach dem Verfahren hergestellte Packung

Die Erfindung betrifft ein Verfahren zur Herstellung einer Schlauchpackung nach dem Oberbegriff des unabhängigen Anspruchs 1, eine Vorrichtung zur Ausführung des Verfahrens nach dem Oberbegriff des unabhängigen Anspruchs 2 sowie eine Packung nach dem Oberbegriff des unabhängigen Anspruchs 11.

Schlauchpackungen und Vorrichtungen zu ihrer Herstellung sowie ein entsprechendes Verfahren sind beispielsweise durch die schweizerischen Patentschriften Nr. 531 437 und 610 261 sowie durch die deutsche Offenlegungsschrift Nr. 26 58 631 bekannt geworden. Zur Bildung der Quernähte wird der Verpackungsschlauch mit Klemmbacken gleichzeitig auf der ganzen Breite beaufschlagt. Ist der Schlauch entlang der Quernähte nicht überall gleich dick, was insbesondere bei Packungen
mit einer Längsnaht und/oder Zwickelfaltungen an den Ecken
der Fall ist, so wird die Packung infolge der grossen Druckunterschiede entlang der Quernähte nicht überall mit dem
optimalen Druck versiegelt. Die Folge sind Packungen mit
stellenweise undichten Quernähten, die den hohen Anforderungen
an die Dichtigkeit von Packungen für Lebensmittel nicht genügen.

Es ist deshalb Aufgabe der Erfindung, ein Verfahren zu schaffen, mit dem Schlauchpackungen mit verbesserter Dichtigkeit
herstellbar sind. Es ist auch Aufgabe der Erfindung, eine
Vorrichtung zur Durchführung des Verfahrens und eine entsprechende Packung zu schaffen.

Die Aufgabe wird durch ein Verfahren mit den Merkmalen des
kennzeichnenden Teils des unabhängigen Anspruchs 1, eine
Vorrichtung mit den Merkmalen des Anspruchs 2 und einer
Packung mit den Merkmalen des Anspruchs 11 gelöst.

Ausführungsbeispiele der Erfindung werden nachfolgend anhand der Zeichnung näher erläutert. Es zeigen:

Fig. 1    eine perspektivische Darstellung einer Siegel- und Schneidvorrichtung für Schlauchpackungen,

Fig. 2    einen Querschnitt durch eine Siegel- und Schneidvorrichtung,

Fig. 3 - 5    Draufsichten auf Präge- und Schneidflächen,

Fig. 6    eine Draufsicht auf eine Schlauchpackung,

Fig. 7    eine Seitenansicht einer Schlauchpackung, und

Fig. 8    eine schematische Darstellung, mit der Bildung einer Quernaht veranschaulicht werden soll.

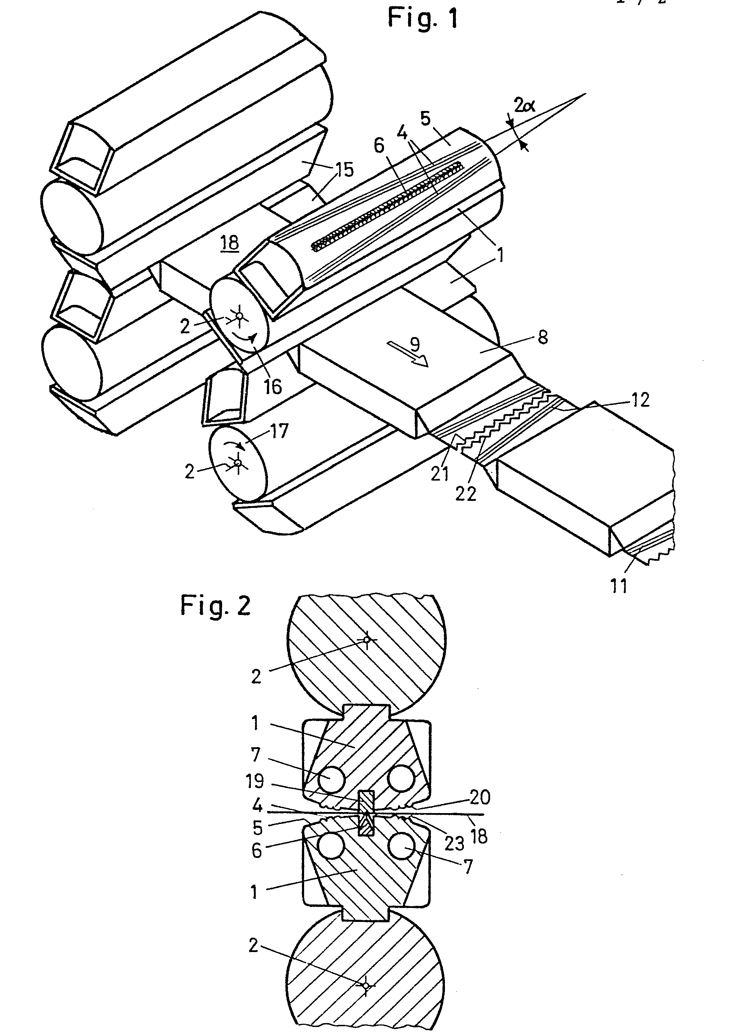

Die Fig. 1 und 2 zeigen eine Siegel- und Schneidvorrichtung mit zwei gegenläufig in den Richtungen der Pfeile 16 und 17 um die Achsen 2 rotierende beheizte Siegelbacken 1. Die Siegelbacken 1 packen einen Schlauch 18 aus versiegelbarem, vorzugsweise schweissbarem Material zwischen zwei mit Füllgut versehenen Abschnitten und versiegeln die gegenüberliegenden Wände des Schlauches 18. Gleichzeitig wird der Schlauch 18 mit einem Trennmesser 6 und einem Gegenhalter 19 durchtrennt.

Diese Siegelbacken 1 besitzen eine zylindrische Oberfläche 5, auf der ein Trennmesser 6 oder ein Gegenhalter 19 und spiegelsymmetrisch dazu zwei Gruppen von parallel angeordneten Rippen 20 mit Prägeflächen 4 angeordnet sind. Bei jedem Siegel- und Schneidvorgang werden eine Fuss- und eine Kopfnaht 12 beziehungsw. 11 sowie zwei Trennkanten 21 und 22 gebildet. Der Verpackungsablauf kann durch Vorschaltung von Vorheizbacken 15 beschleunigt werden. Die Siegelbacken 1 weisen in der Nähe der Prägeflächen 4 Bohrungen 7 für eine Heizung auf.

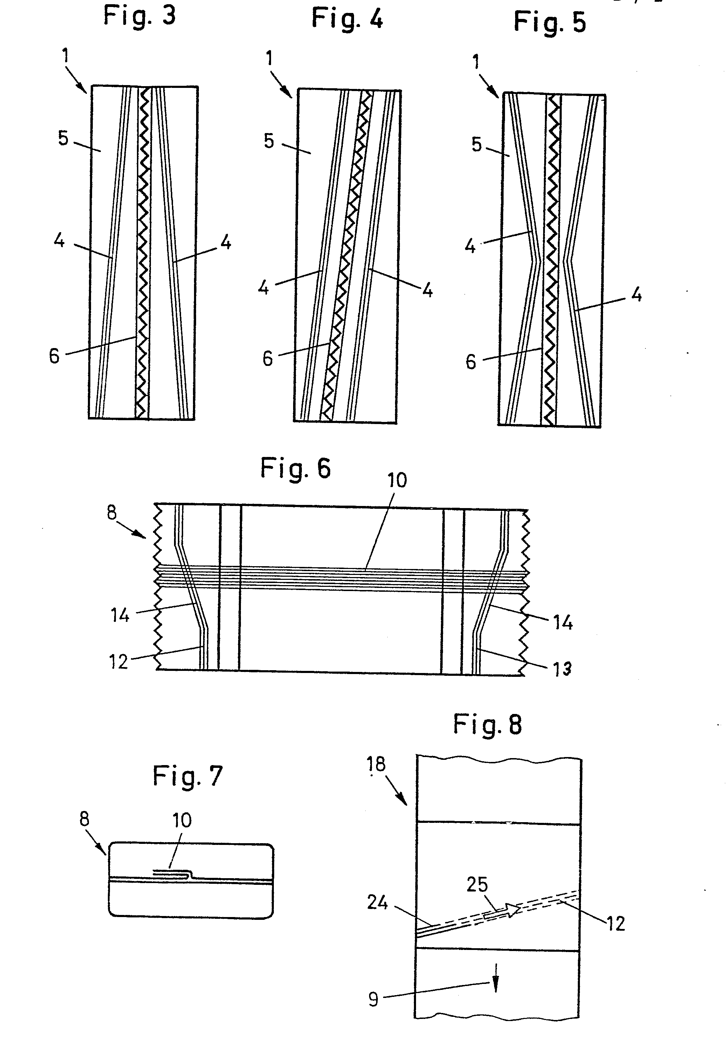

Jede Prägefläche 4 beschreibt eine Schraubenlinie, deren Schraubenachse auf der Rotationsachse 2 der zugehörigen Siegelbacke 1 liegt. Bei der Bildung einer Quernaht 11 oder 12 wandert eine vergleichsweise kleine Druckstelle 24 (Fig. 8) quer zur Förderrichtung 9 bis die ganze Quernaht gebildet ist. Da die Siegelbacken 1 elastisch aneinander gedrückt werden, bleibt der Druck ungeachtet der Dicke des Schlauches 18 über den ganzen Bereich der Quernaht konstant.

Die Rippen 20 der Prägeflächen 4 sind vorzugsweise parallel angeordnet, können jedoch auch kreuzweise oder nach einem anderen geeigneten Muster verlaufen. In den Fig. 3 bis 5 sind auseinander strebende, parallele und pfeilförmig angeordnete Prägeflächen 4 dargestellt. Die Prägeflächen 4 können auch so angeordnet sein, dass nur ein Abschnitt schraubenlinienförmig verläuft. Entsprechende Quernähte 11 und 12 sind in der Fig. 6 dargestellt. Wie die Fig. 6 deutlich zeigt, befinden sich die schräg zur Querrichtung der Packung verlaufenden Abschnitte 14, die den schraubenlinienförmigen Abschnitten der Prägeflächen 4 entsprechen, im Bereich der Längsnaht 10. Die Längsnaht 10, bei welcher der Schlauch 18 eine vierfache Foliendicke aufweist (Fig. 7), wird im Abschnitt 14 überrollt, während im querverlaufenden Abschnitt 13 in bekannter Weise versiegelt wird.


Der Winkel   (Fig. 1) zwischen den Prägeflächen 4 und der Querrichtung wird zweckmässigerweise mindestens 0,5$^o$ und

höchstens 15$^o$ gewählt. Die Prägeflächen 4 befinden sich etwa 0,1 bis 0,3 mm über der zylindrischen Oberfläche 5 und liegen ebenfalls auf einer zylindrischen Fläche. Auf den Prägeflächen 4 sind Entlastungsrillen 23 vorgesehen, in die verdrängtes Verpackungsmaterial ausweichen kann.

Die Bildung einer Quernaht 12 soll anhand der Fig. 8 veranschaulicht werden. Bei der Position des oberen Klemmbackens 1 in der Fig. 1, drückt die Prägefläche 4 lediglich in einen vergleichsweise kleinen Druckbereich 24 auf den Schlauch 18. Bei einer weiteren Bewegung der Klemmbacken 1 in Richtung der Pfeile 16 und 17 (Fig. 1) wandert der Druckbereich 24 in der Richtung des Pfeiles 25 über die ganze Breite des Schlauches 18, bis die ganze Fussnaht 12 gebildet ist.

## Patentansprüche

1.    Verfahren zur Herstellung einer Schlauchpackung (8), wobei ein versiegelbarer Schlauch (18) aus einem flexiblen Kunststoffmaterial zwischen zwei Füllgut enthaltenden Abschnitten zusammengepresst und mit einem Messer (6) getrennt werden, so dass gegenüberliegende Wandteile des Schlauches (18) durch Quernähte (11, 12) miteinander versiegeln, dadurch gekennzeichnet, dass bei der Bildung der Quernähte (11, 12) mindestens in einem Abschnitt der Quernähte (11, 12) ein Druckbereich (24) mit einer Bewegungskomponente quer zur Förderrichtung (9) über den Schlauch (18) bewegt wird.

2.    Vorrichtung zur Ausführung des Verfahrens nach Anspruch 1, mit zwei rotierenden Klemmbacken (1) mit bandförmigen Prägeflächen (4) für je eine Kopfnaht (11) und eine Fussnaht (12), dadurch gekennzeichnet, dass die Prägeflächen (4) mindestens in einem Abschnitt schraubenförmig
verlaufen.

3.      Vorrichtung nach Anspruch 1 oder 2, dadurch gekennzeichnet, dass zwei gegenläufig rotierende Klemmbacken
(1) mit bezüglich der Schlauchfolienebene spiegelsymmetrisch
angeordneten Prägeflächen (4) vorgesehen sind.

4.      Vorrichtung nach Anspruch 2 oder 3, dadurch gekennzeichnet, dass der Winkel $\alpha$ zwischen dem schraubenlinienförmigen Abschnitt und der Querrichtung mindestens $0,5^o$
und höchstens $15^o$ beträgt.

5.      Vorrichtung nach einem der Ansprüche 2 bis 4,
dadurch gekennzeichnet, dass die Prägeflächen (4) radial
um 0,1 bis 0,3 mm vorstehen.

6.      Vorrichtung nach einem der Ansprüche 2 bis 5,
dadurch gekennzeichnet, dass auf jeder Klemmbacke (1) die
Prägefläche (4) für die Kopfnaht (11) und die Prägefläche
(4) für die Fussnaht (12) auseinanderlaufend angeordnet sind.

7.      Vorrichtung nach einem der Ansprüche 2 bis 5,
dadurch gekennzeichnet, dass auf jeder Klemmbacke (1) die
Prägefläche (4) für die Kopfnaht (11) und die Prägefläche
für die Fussnaht (12) parallel angeordnet sind.

8.      Vorrichtung nach einem der Ansprüche 2 bis 5,
dadurch gekennzeichnet, dass auf jeder Klemmbacke (1) die
Prägefläche (4) für die Kopfnaht (11) und die Prägefläche
(4) für die Fussnaht (12) pfeilförmig angeordnet sind.

9.      Vorrichtung nach einem der Ansprüche 2 bis 8,
dadurch gekennzeichnet, dass in den Prägeflächen (4) Entlastungsrillen (23) vorgesehen sind.

10.     Vorrichtung nach einem der Ansprüche 2 bis 9,
dadurch gekennzeichnet, dass auf einer Klemmbacke (1) zwischen der  Prägefläche (4) für die Kopfnaht (11) und der
Prägefläche (4) für die Fussnaht (12) ein Trennmesser (6)
vorgesehen ist.

11.     Packung, hergestellt nach dem Verfahren gemäss
Anspruch 1, bestehend aus einem schlauchförmigen versiegelbaren Kunststoffmaterial, das mindestens an seinen Enden
mit Quernähten (11, 12) dichtend verschlossen ist, dadurch gekennzeichnet, dass die Quernähte (11, 12) mindestens in einem Abschnitt schräg zur Querrichtung (9) verlaufen.

Fig. 1

Fig. 2

Fig. 3

Fig. 4

Fig. 5

Fig. 6

Fig. 7

Fig. 8